# EUROPEAN PATENT SPECIFICATION

(11) **EP 3 098 257 B1**
(45) Date of publication and mention of the grant of the patent: **15.12.2021**
(21) Application number: 15460070.4
(22) Date of filing: 10.09.2015
(51) Int. Cl.: C08J 11/24, C08L 75/04

(54) **METHOD OF GLYCEROLYSIS OF POLYURETHANE WASTE PRODUCT**
VERFAHREN ZUR GLYCEROLYSE EINES POLYURETHANABFALLPRODUKTS
PROCÉDÉ DE GLYCEROLYSIS DE PRODUITS DE DÉCHETS EN POLYURÉTHANE

(30) Priority: 12.05.2015 PL 41231115
(43) Date of publication of application: 30.11.2016
(73) Proprietor: Politechnika Gdanska, 80-233 Gdansk (PL)
(72) Inventor: Datta, Janusz, 81-650 Gdynia (PL); Kopczynska, Patrycja Jutrzenka Trzebiatowska, 80-438 Gdansk (PL)

(56) References cited:
- WO-A2-2009/024102
- MIR MOHAMMAD ALAVI NIKJE ET AL: "Microwave Assisted Split-phase Glycolysis of Polyurethane Flexible Foam Wastes", POLYMER BULLETIN, SPRINGER, BERLIN, DE, vol. 59, no. 1, 15 March 2007 (2007-03-15) , pages 91-104, XP019514958, ISSN: 1436-2449, DOI: 10.1007/S00289-007-0753-1
- C. MOLERO ET AL: "Influence of the use of recycled polyols obtained by glycolysis on the preparation and physical properties of flexible polyurethane", JOURNAL OF APPLIED POLYMER SCIENCE, vol. 109, no. 1, 5 July 2008 (2008-07-05), pages 617-626, XP055299085, US ISSN: 0021-8995, DOI: 10.1002/app.28136
- PATRYCJA KOPCZYNSKA ET AL: "Single-phase product obtained via crude glycerine depolymerisation of polyurethane elastomer: structure characterisation and rheological behaviour", POLYMER INTERNATIONAL, vol. 65, no. 8, 29 August 2016 (2016-08-29), pages 946-954, XP055299086, GB ISSN: 0959-8103, DOI: 10.1002/pi.5128

## Description

The present invention concerns a method of polyurethane waste chemical recycling and glycerolysates obtained by this method from polyurethane waste using an eco-reagent obtained from waste by-product. The invention is applicable in particular for polyurethane production and rubber processing.

Polyurethane waste is generated during the production of technical items as scraps or post-production heads, and come from furniture, construction and automotive industry (Yang W et al.: Procedia Environ. Sci. 2012, 16, 167-175).

In the most of common methods of polyurethane chemical recycling major importance play processes as follows: glycolysis (EP 0,714,930; EP 1,693,409; US 5,300,530; US 6,069,182; US 6,750,260; US 8,962,704), hydrolysis (US 4,196,148; US 4,316,992; US 4,317,939), acidolysis (US 4,339,358) and aminolysis (CN 103,012,838; EP 1,149,862;) of which the main process is glycolysis. During glycolysis occur transesterification reactions of urethane bonds or urea in a case poly(ester-urethane) or poly(urea-urethane), respectively. It can also occur cleavage of crosslinking groups: allophanate or biuret. The products of the thermo-chemical degradation are oligomeric compounds terminated with hydroxyl and amino groups, mainly mono- and dicarbamates. In addition to these products, low molecular weight glycol esters are also created, origin from glycol used for glycolysis reaction and acid from which was built starting oligoestrol (Datta J. and Rohn M.: Polimery 2007, 52(9), 627-633).

It is known from the Polish Patent PL 209,960 and from publication (Datta J. and Rohn M.: Polimery 2007,52(7-8),579-582) method of polyurethane waste glycolysis using synthetic glycols. The method consists in that the polyurethane waste is mixed with glycolysis agent in the form of low molecular weight glycol having a molecular weight from 300 to 900 g/mol. This method requires the use of petrochemical glycolysis agents.

From the literature (Borda et al.: Polym. Degrad. Stab. 2000, 68, 419-422) ,it is known a glycolysis method of poly(ether-urethane) flexible foams and elastomers using as a glycgolysis agent aliphatic glycols, diethanolamine and mixtures of ethylene glycol and diethanolamine. A big disadvantage of this method is obtaining the two phases and there's the need to decant the upper phase to obtain a similar product to the polyol. An additional disadvantage is that obtained, by this method, glycolysates are characterised by very high viscosity.

From the literature (Nike et al.: Polym Bull 2007, 58, 411-423) and (Nikje et al.: Polym Bull 2007, 59, 91-104) is known a glycerolysis method of polyurethane foam using as a decomposing agent, glycerol from petrochemical origin - Iranian Petrochemical Company. This process is carried out using sodium hydroxide, potassium hydroxide as a catalyst. Studies have shown that the product obtained by this method have similar spectroscopic characteristics as the pure polyol used in the polyurethane synthesis. The hydroxyl number of the derived polyol from glycolysis is higher than the pure polyol. A disadvantage of this method is a need to drain the liquid from the solid impurities and unreacted foam and the need for centrifuging the liquid product in order to separate the unreacted polyol from glycerine and byproducts.

In the patent EP 2,480,584 it is described using oil or fat of vegetable or animal origin, as bio-agent for polyurethane chemical decomposition is described, which is an alternative mean to the petrochemical products. Bio-agent can be castor oil or oil polyols produced from castor oil, rapeseed oil, fish oil, soybean oil or mixtures thereof. The decomposition reaction is carried out in the temperature range of 150-300 °C and used decomposition catalysts are monoethanolamine, diethanolamine, triethanolamine, sodium hydroxide, potassium hydroxide, sodium ethoxide, potassium ethoxide, potassium butoxide, titanium (IV) isopropoxide, titanium (IV) propoxide, titanium (IV). A disadvantage of this method is the need to separate the liquid product from the solid residue by filtration.

Patent WO 2009/024102 relates to the glycerolysis of a waste polyurethane foam with a polyhydric polyol selected from a list of polyols comprising also glycerin. However, these polyols are in pure form. Moreover, there are no examples of using glycerol.

So far, no crude glycerine derived from the production of biodiesel was used to thermo-chemical decomposition of polyurethane materials in the form of foams or elastomers.

A glycerolysis method of polyurethane waste according to the invention is characterised in that, the crude glycerine used as the glycerolysis agent, is glycerine obtained as a by-product from the biodiesel fuel production, which is heated, preferably to a temperature between 160 to 220 °C. Then to the so-prepared glycerolysis agent, at once or in batches polyurethane waste is added in the form of foams or elastomers, while maintaining the weight ratio of polyurethane waste polyurethane relative to the glycerolysis agent from 1: 1 to 10: 1, preferably maintaining continuous excess of polyurethane waste in relation to the glycerolysis agent. Glycerolysis process is carried out at a temperature of from 150 to 290 °C, preferably from 220 °C to 240 °C under normal pressure or elevated pressure up to 1.0 atm., until complete dissolution of a waste polyurethane, and preferably the resulting glycerolysate is cooled.

Preferably, glycerolysis reaction is carried out in the presence of a catalyst in the form of potassium acetate or sodium acetate or 1,4-diazabicyclo [2.2.2] octane or zinc (II) stearate or tin (II) octoate or dibutyl tin dilaurate or or titanium(IV) butoxide or titanium(IV) isopropoxide or titanium(IV) propoxide or monoethanolamine or diethanolamine or triethanolamine or lithium hydroxide or sodium hydroxide or potassium hydroxide or sodium ethanolate or potassium ethanolate with the proviso that the catalyst is added to the reaction mixture prior to the addition of polyurethane waste.

The glycerine has a purity of from 40 to 99.5%.

The invention allows to carry out polyurethane waste glycerolysis without the need to distill glycerolysis agent after the reaction, and at the same time obtain products with desired properties. The invention method is environmentally friendly and leads to obtaining semi-products from expensive and difficult to manage polyurethane waste using raw materials waste. Usage of the method according to the invention crude glycerine, a by-product of the biodiesel production process, allows simultaneous management of crude glycerine and polyurethane chemical recycling. The usage of crude glycerine, which was obtained in the processing of natural oils for biodiesel fuel, in the polyurethane decomposition, is a way to manage crude glycerine, technical post-production waste. Crude glycerine, used according to the invention, as a natural glycerolysis agent may also be derived as a by-product from processes for preparing methyl esters from natural resources. The method of the invention can be carried out in the technical installation for glycolysis.

Glycerolysates, obtained in accordance to invention, constitute a new group of semi-products useful as an alternative component in the polyurethane synthesis to produce various of urethane polymers and in rubber processing, where it can be used as a plasticiser.

The invention is further illustrated in the embodiments and the figures where Fig. 1, Fig .2, Fig. 3 and Fig. 4 show the FTIR spectra of obtained glycerolysates, respectively Example 1, 2, 3 and 4.

### Example 1.

Glycerolysis agent as crude glycerine with purity 60%, obtained from bio-diesel fuel production, was introduced in amount of 67 g to a steel reactor, to which 0.67 g the catalyst in the form of potassium acetate was added. The mixture was heated up to 170 ° and the loading of polyurethane waste in the form of polyurethane foam began, maintain the weight ratio of polyurethane waste to crude glycerine 2:1. The polyurethane waste was added to reactor stepwise at a rate to allow mixing of the reactor contents. The dosing time of foams scraps was 15 minutes. During glycerolysis reaction temperature was maintained at 210-220 °C and in atmospheric pressure. Upon completion of dosing the polyurethane waste, the reaction was continued until a complete dissolution of the waste polyurethane. After completion of the process, the contents of the reactor was cooled.

The reaction yield was 85%.

The polyurethane was decomposed to a liquid product of the following characteristics:
1) hydroxyl number of 113.6 mg KOH/g,
2) average molecular weight of 1482 g/mol,
3) density of 1.1043 g/cm³;
4) dynamic viscosity (at 70 °C) of 180 mPa·s.

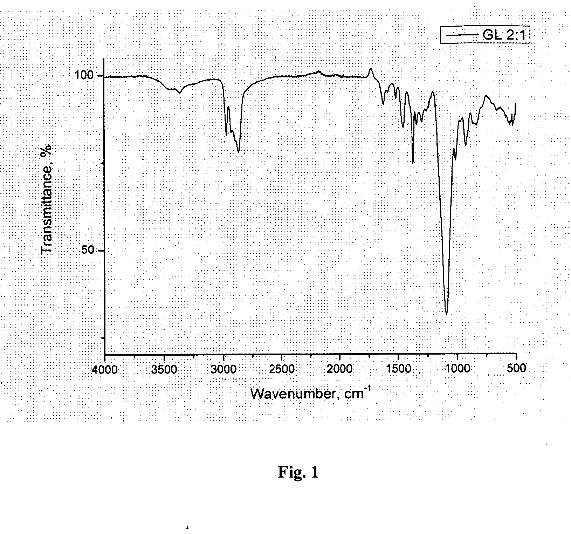

The chemical structure of the obtained glycerolysate determined based on the FTIR spectrum. FTIR spectrum of glycerolysate following this procedure is shown in Fig. 1

### Example 2.

A glycerolysis process of polyurethane waste was carried out as described in Example 1 except that the reaction was performed in the absence of a catalyst. To the steel reactor was introduced crude glycerine with a purity of 60%, obtained from the production of methyl esters, and was heated up to 180 °C. Then the loading of fragmented elastomer was started, while the weight ratio of the elastomer to the waste glycerol 1: 1 was maintained. The elastomer was added in batches at a rate to allow mixing of the reactor contents. The dosing time of polyurethane waste was 15 minutes. During glycerolysis reaction temperature was maintained at 220-230 °C and atmospheric pressure. Upon completion of dosing the polyurethanes waste, the reaction was continued for 15 minutes until complete dissolution of polyurethane. After completion of the process, the contents of the reactor was cooled.

The reaction yield was 89%.

The following characteristics indicated obtained glycerolysate:
1) hydroxyl number of 213.2 mg KOH/g;
2) average molecular weight of 789 g/mol;
3) density of 1.200 g/cm³;
4) dynamic viscosity (at 70 °C) of 240 mPa·s.

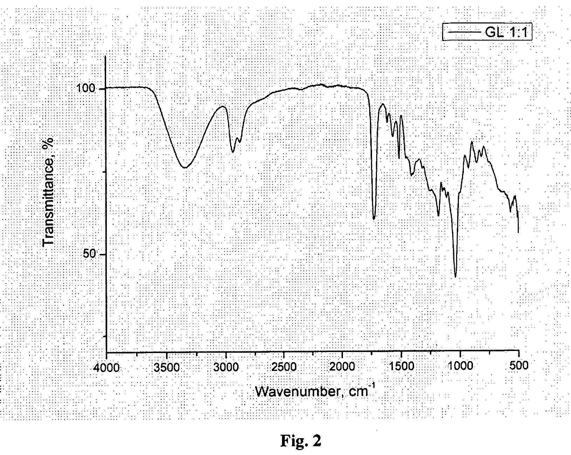

The chemical structure of the obtained glycerolysates determined based on the FTIR spectrum. FTIR spectrum of obtained glycerolysates following this procedure is shown in Fig. 2.

### Example 3.

A glycerolysis process of polyurethane waste was carried out as described in Example 1 except that, the steel reactor was charged with 40 g of crude glycerine with a purity of 60%, obtained as a by-product from the biodiesel fuel production and 0.8 g of the catalyst in the form 1,4-diazabicyclo[2.2.2]octane. The mixture was heated to a temperature 180 °C and then fragmented polyurethane elastomer was added at once. The weight ratio of elastomer to crude glycerol was 4: 1. During glycerolysis reaction, the temperature was maintained at 230-240 °C and in atmospheric pressure. The reaction was continued for 35 minutes until complete dissolution of polyurethane waste. After completion of the process, the contents of the reactor was cooled.

The reaction yield was 94%.

The resulting glycerolysate had the following characteristics:
1) hydroxyl number of 211 mg KOH/g;
2) average molecular weight of 797 g/mol;
3) density of 1.1852 g/cm³;
4) dynamic viscosity (at 70 °C) of 206 mPa·s.

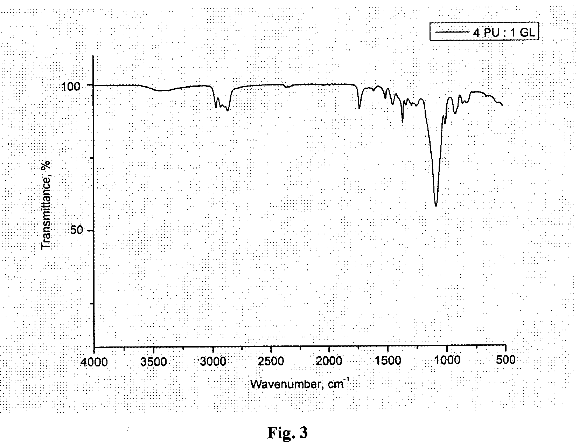

The chemical structure of the obtained glycerolysates determined based on the FTIR spectrum. FTIR spectrum of obtained glycerolysates following this procedure is shown in Fig. 3.

### Example 4.

A glycerolysis process of polyurethane waste was carried out as described in Example 3 except that, the steel reactor was charged with 18 g of crude glycerine with a purity of 60% and 0.91 g of zinc stearate (II). The mixture was heated to 190 °C and then loading of fragmented elastomer started. The weight ratio of elastomer to crude glycerol was 10: 1. Polyurethane elastomer was added portion-wise at such rate to allow mixing of the reactor contents. The dosing time of polyurethane waste was 35 minutes. During glycerolysis reaction temperature was maintained at 220-230 °C and atmospheric pressure. Upon completion of dosing the polyurethanes waste, the reaction was continued for 50 minutes until complete dissolution of polyurethane. After completion of the process, the contents of the reactor was cooled.

The reaction yield was 96%.

The following characteristics indicated obtained glycerolysate:
1) hydroxyl number of 165.5 mg KOH/g;
2) average molecular weight of 1017 g/mol;
3) density of 1.1790 g/cm³;
4) dynamic viscosity (at 70 °C) of 1050 mPa·s.

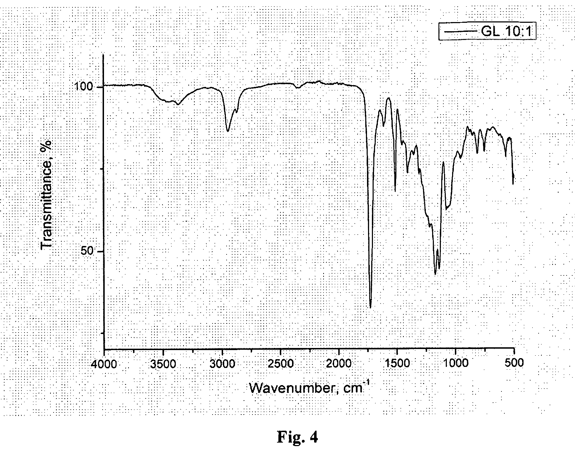

The chemical structure of the obtained glycerolysates determined based on the FTIR spectrum. FTIR spectrum of obtained glycerolysates following this procedure is shown in Fig. 4.

## Claims

1. A process of polyurethane waste chemical recycling for converting polyurethane materials into reusable semi-product by crude glycerine, **characterised in that**, crude glycerine obtained as a by-product from the biodiesel fuel production is used for the glycerolysis of waste polyurethane foam or elastomer as glycerolysis agent and the waste glycerine have a purity of 40 to 99,5%, comprising the steps of heating the glycerolysis agent, preferably to the temperature between 160 and 220°C, then adding to the so-prepared glycerolysis agent, at one or in batches, polyurethane waste in the form of polyurethane foams or elastomer and mixing polyurethane waste with the glycerolysis agent in the weight ratio of polyurethane waste in relation to the glycerolysis agent range from 1:1 to 10:1, preferably maintaining continuous excess of polyurethane waste relative to the glycerolysis agent, wherein the glycerolysis process is carried out at a temperature between 150 to 290°C, preferably from 220 °C to 240 °C, under normal pressure or elevated pressure up to 1.0 atm, until complete dissolution of the polyurethane, and after that preferably obtained glycerolysate is cooled.

2. A process according to Claim 1,**characterised in that**, the glycerolysis reaction is carried out in the presence of a catalyst of potassium acetate or sodium acetate or 1,4-diazabicyclo [2.2.2] octane or zinc (II) stearate or tin (II) octoate or dibutyl tin dilaurate or titanium (IV) butoxide or titanium (IV) isopropoxide or titanium (IV) propoxide or monoethanolamine or diethanolamine or triethanolamine or lithium hydroxide or sodium hydroxide or potassium hydroxide or sodium ethanolate or potassium ethanolate with the proviso that the catalyst is added to the reaction mixture prior to the addition of polyurethane waste.

## Patentansprüche

1. Verfahren zum chemischen Recycling von Polyurethanabfällen zur Umwandlung von Polyurethanmaterialien in ein wiederverwendbares Halbprodukt durch Rohglycerin, **dadurch gekennzeichnet, dass** Rohglycer, das als Nebenprodukt bei der Biodieselkraftstoffherstellung erhalten wird, für die Glycerolyse von Polyurethanschaum- oder -Elastomerabfällen als Glycerolysemittel verwendet wird und das Abfallglycerin eine Reinheit von 40 bis 99,5 % aufweist, umfassend die Schritte des Erhitzens des Glycerolysemittels, vorzugsweise auf die Temperatur zwischen 160 und 220°C , dann Zugabe zu dem so vorbereitet Glycerolysemittel, einzeln oder in Chargen, Polyurethanabfälle in Form von Polyurethanschaum oder Elastomeren und Mischen von Polyurethanabfällen mit dem Glycerolysemittel im Gewichtsverhältnis von Polyurethanabfällen im Verhältnis zum Glycerolysemittel im Bereich von 1:1 bis 10:1, vorzugsweise einen kontinuierlichen Überschuss an Polyurethanabfall relativ zum Glycerolysemittel aufrechterhalten, wobei das Glycerolyseverfahren bei einer Temperatur zwischen 150 bis 290 °C, vorzugsweise von 220 °C bis 240 °C, unter Normaldruck oder erhöhtem Druck bis zu 1,0 atm, bis zur vollständigen Auflösung des Polyurethans durchgeführt wird und danach vorzugsweise das erhaltene Glycerolysat abgekühlt wird.

2. Verfahren nach Anspruch 1, **dadurch gekennzeichnet, dass** die Glycerolysereaktion in Gegenwart eines Katalysators aus Kaliumacetat oder Natriumacetat oder 1,4-Diazablcyclo[2.2.2]octan oder Zinkstearat oder Zinn(II)-Octoat oder Dibutylzinndilaurat oder Titantetrabutanolat oder Titantetraisopropanolat oder Titantetrapropanolat oder Monoethanolamin oder Diethanolamin oder Triethanolamin oder Lithiumhydroxid oder Natriumhydroxid oder Kaliumhydroxid oder Natriumethanolat oder Kaliumethanolat durchgeführt wird, mit der Maßgabe, dass der Katalysator dem Reaktionsgemisch vor der Zugabe von Polyurethanabfällen zugegeben wird.

## Revendications

1. Procédé de recyclage chimique de déchets de polyuréthane pour convertir des matériaux de polyuréthane en semi-produit réutilisable par la glycérine brute, **caractérisé en ce que** la glycérine brute obtenue comme sous-produit de la production de carburant biodiesel est utilisée pour la glycérolyse de déchets de mousse ou d'élastomère de polyuréthane comme agent de glycérolyse et la glycérine de déchets a une pureté de 40 à 99. 5%, comprenant les étapes consistant à chauffer l'agent de glycérolyse, de préférence à une température comprise entre 160 et 220°C, puis à ajouter à l'agent de glycérolyse ainsi préparé, en une seule fois ou par lots, des déchets de polyuréthane sous forme de polyuréthane de mousses ou d'élastomère et à mélanger les déchets de polyuréthane avec l'agent de glycérolyse dans un rapport pondéral des déchets de polyuréthane par rapport à l'agent de glycérolyse compris entre 1 : 1 à 10:1, en maintenant de préférence un excès continu de déchets de polyuréthane par rapport à l'agent de glycérolyse, dans lequel le processus de glycérolyse est réalisé à une température comprise entre 150 et 290°C, de préférence entre 220°C et 240°C, sous pression normale ou sous pression élevée jusqu'à 1.0 atm, jusqu'à dissolution complète du polyuréthane, et après cela, de préférence le obtenu glycérolysat est refroidi.

2. Procédé selon la revendication 1, **caractérisé en ce que** la réaction de glycérolyse est effectuée en présence d'un catalyseur d'acétate de potassium ou d'acétate de sodium ou de 1,4-diazabicyclo[2.2.2]octane ou de stéarate de zinc ou de 2-éthylhexanoate d'étain(II) ou de dilaurate de dibutylétain ou de n-butoxyde de titane(IV) ou d'isopropoxyde de titane (IV) ou de propoxyde de titane (IV) ou de monoéthanolamine ou de diéthanolamine ou de triéthanolamine ou d'hydroxyde de lithium ou d'hydroxyde de sodium ou d'hydroxyde de potassium ou d'éthanolate de sodium ou d'éthanolate de potassium à condition que le catalyseur soit ajouté au mélange réactionnel avant l'addition des déchets de polyuréthane.
